# EUROPEAN PATENT SPECIFICATION

(11) **EP 3 027 664 B1**
(45) Date of publication and mention of the grant of the patent: **06.09.2017**
(21) Application number: 14744306.3
(22) Date of filing: 24.07.2014
(51) Int. Cl.: C08F 210/02, C08F 214/24, C08L 27/12, H01B 3/30

(54) **FLUORINE-CONTAINING THERMOPLASTIC ELASTOMER COMPOSITION**
FLUORHALTIGE THERMOPLASTISCHE ELASTOMERZUSAMMENSETZUNG
COMPOSITION D'ÉLASTOMÈRE THERMOPLASTIQUE CONTENANT DU FLUOR

(30) Priority: 30.07.2013 US 201361859928 P
(43) Date of publication of application: 08.06.2016
(73) Proprietor: Solvay Specialty Polymers Italy S.p.A., 20021 Bollate (MI) (IT)
(72) Inventor: BANDI, Suneel, Voorhees, NJ 08043 (US); LI, Kun, Media, PA 19063 (US); SCHILD, Philip, West Chester, PA 19382 (US); FIGUEROA, Edwin, Wilmington, DE 19850 (US); KENT, Bradley Lane, Woolwich Township, NJ 08085 (US)
(74) Representative: Benvenuti, Federica
(86) International application number: PCT/EP2014/065881
(87) International publication number: WO 2015/014699

(56) References cited:
- EP-A1- 0 543 342
- EP-A1- 1 816 161
- US-A- 6 153 681

## Description

### Cross-reference to related application

This application claims priority to U.S. provisional application No. 61/859928 filed on July 30, 2013, the whole content of this application being incorporated herein by reference for all purposes.

### Technical Field

The present invention relates to a fluorine-containing thermoplastic elastomer composition, comprising a continuous thermoplastic fluorocarbon polymer phase and a dispersed vulcanized fluorine-containing elastomer phase, and to a method of coating cables using the same.

### Background Art

Two-phase compositions comprising a continuous phase thermoplastic material and a disperse phase elastomer, produced by dynamically vulcanizing the elastomer while the dispersed phase elastomer is mixed under shear in the continuous thermoplastic material kept in the molten state are well known in the art and often referred to as thermoplastic vulcanizates (TPV).

These materials are particularly advantageous in that they derive their rubber-like properties from the dispersed phase, so that they can be notably used in all rubber-typical fields of use (sealing articles, including seals and gaskets, pipes, hoses, flat sheets, and the like), While being processable as thermoplasts, including possibility of reforming scraps, flashes or defective parts.

Because of advantageous properties of fluorine-containing materials, TPV including both thermoplastic fluorinated polymer continuous phase, and more specifically an ethylene-chlorotrifluoroethylene or ethylene-tetrafluoroethylene phase, and fluorine-containing elastomer dispersed phase have attracted great deal of attention for providing outstanding thermal resistance, chemical resistance, and the like.

For instance, patent document EP 168020 A (DUPONT DE NEMOURS) 01.05.1986 discloses fluorinated thermoplastic elastomer containing two phases, namely a crystalline thermoplastic phase and a dispersed fluorinated amorphous elastomeric phase, obtained by blending the components in the molten state and then dynamically curing the same, e.g. in an extruder through addition of a curing agent (ionic curing or peroxide curing). Thermoplastic polymer can be notably ECTFE; example 9 pertains to the preparation in a Braebender of a TPV comprising 70 % wt vinylidene fluoride (VDF)/hexafluoropropylene (HFP) copolymer and 30 % wt of ECTFE copolymer (CTFE/E 80/20 wt/wt) by ionic curing.

Still, patent document US 5006594 (DUPONT DE NEMOURS) 04.09.1991 discloses new blends of fluorinated thermoplastic elastomers containing a two-phase composition including a continuous phase of a melt processable resin and a dispersed phase of an amorphous crosslinked fluoroelastomer. ETFE and ECTFE are mentioned as possible thermoplastic fluororesin.

Because TPV exhibit thermoplasticity thus improving their processability, and still are endowed with similar flexibility to conventional vulcanised elastomers, and with broad chemical resistance, they are chiefly used as sealing materials in the chemical and semiconductor industries.

Nevertheless, because of their flexibility, low flammability and oil, fuel and chemical resistance, their use for wire and cable sheathing has been also considered.

Notably, US 6153681 (DUPONT DE NEMOURS) 28.11.2000 mentions the use of fluorinated TPV for Wire and Cable applications. This document specifically discloses a thermoplastic elastomer composition including a crystalline portion and an elastomeric portion, which can be manufactured by sequential polymerization in aqueous medium; said crystalline portion can be notably ECTFE. The TPVs disclosed therein are taught to be suitable for being used in different fields, including notably wire and cable jacketing (see column 5, lines 20 to 27).

Nevertheless, for a TPV to be suitable for being advantageously used in wire and cable applications, and hence processed by coaxial extrusion to provide flexible sheathings, it is generally understood that said TPV shall be highly flexible and inherently possess a reduced Shore A hardness.

While plasticizers and lubricants can be incorporated for achieving that goal and improving performances of the TPV in W&C line extrusion, there remains a need in the art for TPV compounds possessing enhanced flexibility and reduced hardness, so as to be more advantageously suitable for cable sheathing.

### Summary of invention

The Applicant has now found that the incorporation in the thermoplastic fluoropolymer based on ethylene and any of chlorotrifluoroethylene and tetrafluoroethylene of well-defined amount of certain (per)fluoroalkylvinlyether monomers is particularly effective in delivering, after dynamic vulcanization in admixture with fluoroelastomers, thermoplastic vulcanizate having improved flexibility and hence ensuring improved performances in W&C applications.

It is thus hereby provided a thermoplastic vulcanizate fluorine-containing composition [vulcanizate (C)], comprising a continuous thermoplastic fluoropolymer phase and a dispersed vulcanized fluoroelastomer phase, said composition comprising:
- at least one thermoplastic fluoropolymer [polymer (F), herein below], said polymer (F) comprising
   (j) from 40 to 55% by moles of recurring units derived from ethylene (E);
   (jj) from 55 to 40% by moles of recurring units derived from at least one of chlorotrifluoroethylene (CTFE) and tetrafluoroethylene (TFE); and
   (jjj) from 0.5 to 10% by moles of recurring units derived from of at least one (per)fluoroalkylvinylether of formula CX₂=CX-OR_{f}, wherein each of X, equal to or different from each other, is independently H or F (preferably F); and R_{f} is a C₁-C₁₂ (per)fluoroalkyl group or a C₁-C₁₂ (per)fluoro-oxy-alkyl group comprising one or more than one catenary oxygen atoms [monomer (V)],
   with % by moles being referred to the total moles of recurring units of the polymer (F); and
- at least one (per)fluoroelastomer [elastomer (A)].

The Applicant has surprisingly found that when the polymer (F), as above detailed, comprises above defined amount of recurring units derived from monomer (V), the vulcanizate (C) containing the same possesses improved flexibility behaviour, and reduced hardness, so that such vulcanizate (C) possesses advantageous performances for being used in cable sheathing.

The invention further pertains to a precursor mixture [mixture (M)] of a thermoplastic vulcanizate fluorine-containing composition, said composition comprising:
- at least one thermoplastic fluoropolymer [polymer (F)], as above detailed;
- at least one (per)fluoroelastomer [elastomer (A)],
   and
- at least one curing system for the elastomer (A).

The invention further pertains to a method for manufacturing the vulcanizate (C), as above detailed, comprising dynamic curing of the precursor mixture, as above detailed.

Still, the invention pertains to a cable comprising at least one component comprising the vulcanizate (C), as above detailed.

Finally, the invention pertains to a method of manufacturing a cable, as above detailed, including using the mixture (M), as above detailed.

### Brief description of drawings

FIG. 1 is a section view of an insulated cable comprising a primary insulation sheath made from the vulcanizate (C).
FIG. 2 is a side view, with parts broken away, of a communication cable (7) according to a second embodiment of the invention.
FIG. 3 is a cross-sectional view along A-A' plane (see FIG.2) of the communication cable (7) according to the second embodiment of the invention the invention.

### Description of embodiments

As mentioned above, polymer (F) is a thermoplast, that is to say a polymer which softens on heating and hardens on cooling at room temperature, which at room temperature exists below its glass transition temperature if amorphous or below its melting point if semi-crystalline.

It is nevertheless generally preferred for the polymer (F) to be semi-crystalline, that is to say to have a definite melting point; preferred polymers (F) are those possessing a heat of fusion of at least 5 J/g, preferably of at least 10 J/g, more preferably at least 30 J/g. Without upper limit for heat of fusion being critical, it is nevertheless understood that polymer (F) will generally possess a heat of fusion of at most 55 J/g, preferably of at most 53 J/g, more preferably of at most 50 J/g.

Heat of fusion is generally determined by DSC according to ASTM D1638 standard.

Polymer (F) used in the TPV composition of this invention typically comprises preferably:
(j) from 45 to 53 % by moles of recurring units derived from E;
(jj) from 55 to 45% by moles of recurring units derived from at least one of CTFE and TFE; and
(jjj) from 0.5 to 5%, preferably from 0.5 to 3 % by moles of recurring unit derived from at least one monomer (V),
with % by moles being referred to the total moles of recurring units of the polymer (F).

Further, in addition, the polymer (F) may additionally comprise recurring units derived from a comonomer (jv) different from (j) E, from (jj) CTFE and/or TFE, and from (jjj) monomer (V). When present, recurring units derived from said comonomer will be present in an amount of up to 5 % moles, preferably up to 2.5 % moles. Said additional comonomer (jv) can be a fluorine-free (hydrogenated) comonomer or can be a fluorinated comonomer. Said hydrogenated comonomer (jv) can be notably selected from (meth)acrylic monomers, vinyl acetate, vinyl ethers, styrene, and the like.

Said fluorinated comonomer (jv) can be selected from the group consisting of:
(a) C₃-C₈ perfluoroolefins, such as hexafluoropropylene (HFP);
(b) hydrogen-containing C₂-C₈ fluoro-olefins, such as C₂-C₈ partially fluorinated olefins, vinyl fluoride (VF), vinylidene fluoride (VDF), trifluoroethylene (TrFE), perfluoroalkyl ethylenes of formula CH₂ = CH-R_{f}, wherein R_{f} is a C₁-C₆ perfluoroalkyl group;
(c) (per)fluorodioxoles having formula : 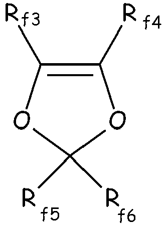 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles.

The monomer (V) can be advantageously selected from the group consisting of:
- perfluoroalkylvinylethers complying with formula CF₂=CFOR_{f1} in which R _{f1} is a C₁-C₆ perfluoroalkyl, and more particularly any of -CF₃, -C₂F₅, and -C₃F₇;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇;
- fluoro-oxyalkylvinylethers complying with formula CF₂=CFOX₀, in which X₀ is a C₁-C₁₂ oxyalkyl or (per)fluorooxyalkyl comprising one or more catenary oxygen; more specifically fluoroalkyl-methoxy-vinylethers complying with formula CF₂=CFOCF₂OR_{f2} in which R_{f2} is a C₁-C₆ fluoro-or perfluoroalkyl, e.g. -CF₃, -C₂F₅, -C₃F₇ or a C₁-C₆ (per)fluorooxyalkyl having one or more ether groups, like -C₂F₅-O-CF₃.

Still, the monomer (V) is most preferably selected from the group consisting of perfluoroalkylvinylethers complying with formula CF₂=CFOR _{f1} in which R_{f1} is a C₁-C₆ perfluoroalkyl, and more particularly any of -CF₃, -C₂F₅, and -C₃F₇.

Recurring units (jj) of polymer (F) are preferably derived from CTFE, that is to say that polymer (F) is preferably an ECTFE polymer.

ECTFE polymers suitable in the composition of the invention typically possess a melting temperature exceeding 220°C, preferably exceeding 225°C, even exceeding 230°C, preferably exceeding 235°C. The melting temperature is determined by Differential Scanning Calorimetry (DSC) at a heating rate of 10°C/min, according to ASTM D 3418.

ECTFE polymers which have been found to give particularly good results in the composition of the invention are those consisting essentially of recurring units derived from:
(j) from 46 to 52% by moles of ethylene (E);
(jj) from 54 to 48% by moles of chlorotrifluoroethylene (CTFE), based on the sum of (j) and (jj), and
(jjj) from 0.01 to 5 % by moles, based on the sum of (j), (jj) and (jjj), of at least one perfluoroalkylvinylethers complying with formula CF₂=CFOR_{f1} in which R_{f1} is a C₁-C₆ perfluoroalkyl, e.g. CF₃, C₂F₅, C₃F₇.

End chains, defects or minor amounts of monomer impurities leading to recurring units different from those above mentioned can be still comprised in the preferred ECTFE, without these affecting properties of the material.

The melt flow rate of the ECTFE polymer, measured following the procedure of ASTM 3275-81 at 230°C and 2.16 Kg, ranges generally from 0.01 to 75 g/10 min, preferably from 0.1 to 50 g/10 min, more preferably from 0.5 to 30 g/10 min.

For the purposes of this invention, the term "(per)fluoroelastomer" [elastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer).

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Non limitative examples of suitable (per)fluorinated monomers are notably:
- C₂-C₈ perfluoroolefins, such as tetrafluoroethylene (TFE), hexafluoropropene (HFP);
- C₂-C₈ hydrogen-containing fluoroolefins, such as vinylidene fluoride (VDF), vinyl fluoride, 1,2-difluoroethylene, hexafluoroisobutene (HFIB), and trifluoroethylene (TrFE);
- (per)fluoroalkylethylenes complying with formula CH₂=CH-R_{f0}, in which R _{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇ ;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇ ;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂OR _{f2} in which R_{f2} is a C₁-C₆ fluoro- or perfluoroalkyl, e.g. -CF₃, -C₂F₅, -C₃F₇ or a C₁-C₆ (per)fluorooxyalkyl having one or more ether groups, like -C₂F₅ -O-CF₃;
- functional fluoro-alkylvinylethers complying with formula CF₂=CFOY₀, in which Yo is a C₁-C₁₂ alkyl or (per)fluoroalkyl, or a C₁-C₁₂ oxyalkyl or a C₁
- C₁₂ (per)fluorooxyalkyl, said Yo group comprising a carboxylic or sulfonic acid group, in its acid, acid halide or salt form;
- fluorodioxoles, of formula : 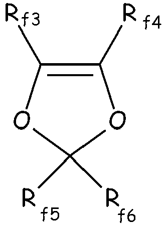 wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

Examples of hydrogenated monomers are notably hydrogenated alpha-olefins, including ethylene, propylene, 1-butene, diene monomers, styrene monomers, alpha-olefins being typically used.

(Per)fluoroelastomers (A) are in general amorphous products or products having a low degree of crystallinity (crystalline phase less than 20 % by volume) and a glass transition temperature (Tg) below room temperature. In most cases, the (per)fluoroelastomer has advantageously a Tg below 10°C, preferably below 5°C, more preferably 0°C.

The (per)fluoroelastomer (A) is preferably selected among:
(1) VDF-based copolymers, in which VDF is copolymerized with at least one comonomer selected from the group consisting of the followings classes, with the provision that such comonomer is different from VDF:
   (a1) C₂-C₈ perfluoroolefins, such as tetrafluoroethylene (TFE), hexafluoropropylene (HFP);
   (b1) hydrogen-containing C₂-C₈ fluoro-olefins, such as C₂-C₈ partially fluorinated olefins, vinyl fluoride (VF), trifluoroethylene (TrFE), perfluoroalkyl ethylenes of formula CH₂ = CH-R_{f}, wherein R_{f} is a C₁-C₆ perfluoroalkyl group;
   (c1) C₂-C₈ chloro and/or bromo and/or iodo-fluoroolefins such as chlorotrifluoroethylene (CTFE);
   (d1) (per)fluoroalkylvinylethers of formula CF₂ = CFOR_{f}, wherein R_{f} is a C₁ -C₆ (per)fluoroalkyl group; preferably perfluoroalkylvinylethers (PAVE) of above formula wherein R_{f} is C₁-C₆ perfluoroalkyl group, e.g. CF₃, C₂F₅, C ₃F₇;
   (e1) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
   (f1) (per)fluorodioxoles having formula : 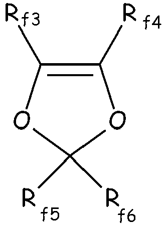 wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, -C₃F₇, -OCF₃, -OCF₂CF₂OCF₃; preferably, perfluorodioxoles;
   (g1) (per)fluoro-methoxy-vinylethers (MOVE, hereinafter) having formula: CFX² = CX²OCF₂OR"_{f}
      wherein R"_{f} is selected among C₁-C₆ (per)fluoroalkyls, linear or branched; C₅-C₆ cyclic (per)fluoroalkyls; and C₂-C₆ (per)fluorooxyalkyls, linear or branched, comprising from 1 to 3 catenary oxygen atoms, and X² = F, H; preferably X² is F and R"_{f} is -CF₂CF₃ (MOVE1); -CF₂CF₂OCF₃ (MOVE2); or -CF₃ (MOVE3);
   (h1) C₂-C₈ non-fluorinated olefins (Ol), for example ethylene and propylene; and
(2) TFE-based copolymers, in which TFE is copolymerized with at least one comonomer selected from the group consisting of the classes (a1), (c1), (d1), (e1), (g1), (h1), and class (i1) below, with the provision that such comonomer is different from TFE:
   (i2) perfluorovinyl ethers containing cyanide groups, such as notably those described in patents US 4 281 092, US 5 447 993 and US 5 789 489.

Most preferred (per)fluoroelastomers (A) are those having following compositions (in mol %) :
(i) vinylidene fluoride (VDF) 35-85 %, hexafluoropropene (HFP) 10-45 %, tetrafluoroethylene (TFE) 0-30 %, perfluoroalkyl vinyl ethers (PAVE) 0-15 %;
(ii) vinylidene fluoride (VDF) 50-80 %, perfluoroalkyl vinyl ethers (PAVE) 5-50 %, tetrafluoroethylene (TFE) 0-20 %;
(iii) vinylidene fluoride (VDF) 20-30 %, C₂-C₈ non-fluorinated olefins (Ol) 10-30 %, hexafluoropropene (HFP) and/or perfluoroalkyl vinyl ethers (PAVE) 18-27 %, tetrafluoroethylene (TFE) 10-30 %;
(iv) tetrafluoroethylene (TFE) 50-80 %, perfluoroalkyl vinyl ethers (PAVE) 20-50 %;
(v) tetrafluoroethylene (TFE) 45-65 %, C₂-C₈ non-fluorinated olefins (Ol) 20-55 %, vinylidene fluoride 0-30 %;
(vi) tetrafluoroethylene (TFE) 32-60 % mol %, C₂-C₈ non-fluorinated olefins (Ol) 10-40 %, perfluoroalkyl vinyl ethers (PAVE) 20-40 %, fluorovinyl ethers (MOVE) 0-30 %;
(vii) tetrafluoroethylene (TFE) 33-75 %, perfluoroalkyl vinyl ethers (PAVE) 15-45 %, vinylidene fluoride (VDF) 5-30 %, hexafluoropropene HFP 0-30 %;
(viii) vinylidene fluoride (VDF) 35-85 %, fluorovinyl ethers (MOVE) 5-40 %, perfluoroalkyl vinyl ethers (PAVE) 0-30 %, tetrafluoroethylene (TFE) 0-40 %, hexafluoropropene (HFP) 0-30 %;
(ix) tetrafluoroethylene (TFE) 20-70 %, fluorovinyl ethers (MOVE) 30-80 %, perfluoroalkyl vinyl ethers (PAVE) 0-50 %.

Optionally, (per)fluoroelastomer (A) of the present invention also comprises recurring units derived from at least one bis-olefin [bis-olefin (OF)] having general formula : 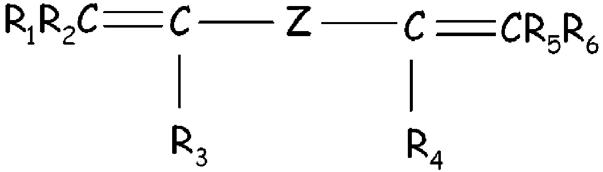 wherein R₁, R₂, R₃, R₄, R₅ and R₆, equal or different from each other, are H, a halogen, or a C₁-C₅ optionally halogenated group, possibly comprising one or more oxygen group; Z is a linear or branched C₁-C₁₈ optionally halogenated alkylene or cycloalkylene radical, optionally containing oxygen atoms, or a (per)fluoropolyoxyalkylene radical.

The bis-olefin (OF) is preferably selected from the group consisting of those complying with formulae (OF-1), (OF-2) and (OF-3): 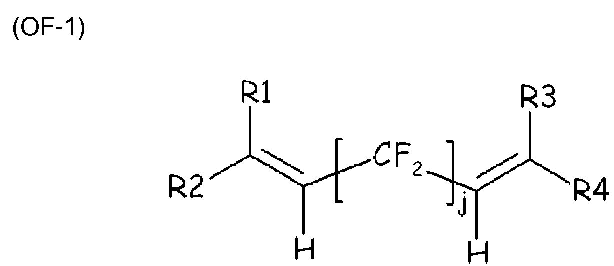 wherein j is an integer between 2 and 10, preferably between 4 and 8, and R1, R2, R3, R4, equal or different from each other, are H, F or C₁₋₅ alkyl or (per)fluoroalkyl group; 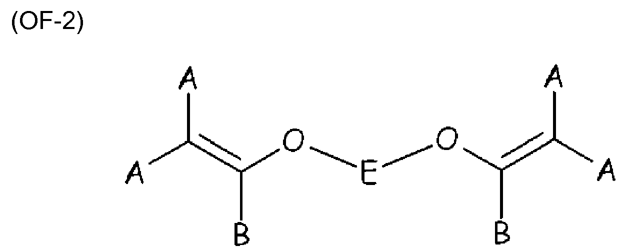 wherein each of A, equal or different from each other and at each occurrence, is independently selected from F, Cl, and H; each of B, equal or different from each other and at each occurrence, is independently selected from F, Cl, H and OR_{B}, wherein R_{B} is a branched or straight chain alkyl radical which can be partially, substantially or completely fluorinated or chlorinated; E is a divalent group having 2 to 10 carbon atom, optionally fluorinated, which may be inserted with ether linkages; preferably E is a -(CF₂)ₘ- group, with m being an integer from 3 to 5; a preferred bis-olefin of (OF-2) type is F₂C=CF-O-(CF₂)₅-O-CF=CF₂. 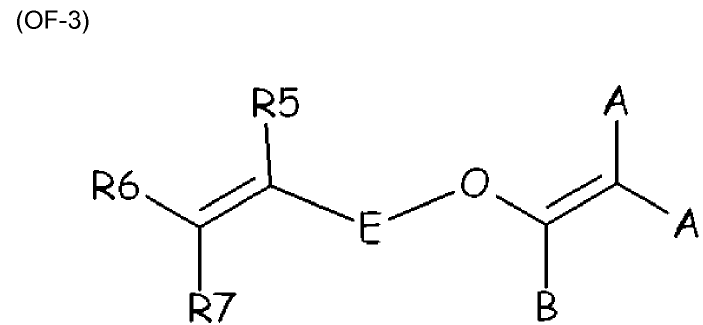 wherein E, A and B have the same meaning as above defined; R5, R6, R7, equal or different from each other, are H, F or C₁₋₅ alkyl or (per)fluoroalkyl group.

While the amount of recurring units derived from bis-olefin (OL) is not particularly limited, for ensuring adequate processability, the amount of said recurring units will be typically of at least 0.01% moles, preferably of at least 0.03 % moles and more preferably of at least 0.05 % moles, and typically of at most 5.0 % moles, preferably at most 0.5 % moles, more preferably at most 0.2 % moles, with respect to all recurring units of the fluoroelastomer.

The weight ratio between polymer (F) and elastomer (A) is not particularly critical, provided that it is selected by routine experiments so as to deliver a continuous thermoplastic fluoropolymer phase and a dispersed vulcanized fluoroelastomer phase in the vulcanizate (C). Generally the weight ratio polymer (F)/elastomer (A) will be comprised between 10/90 wt/wt to 50/50 wt/wt, preferably 20/80 to 40/60 wt/wt. The skilled in the art will select most appropriate weight ratio in view of target final properties of the vulcanizate (C).

The vulcanizate (C) may comprise additional optional ingredients, such as acid scavengers, plasticizers, extender oils, synthetic processing oils, stabilizers, processing aids, fillers, pigments, adhesives, tackifiers, and waxes. Such additional ingredients might be blended into the precursor mixture (M), or can be later compounded into the vulcanizate (C) after dynamic curing.

The invention further pertains to a precursor mixture [mixture (M)] of a thermoplastic vulcanizate fluorine-containing composition, said mixture (M) comprising:
- at least one thermoplastic fluoropolymer [polymer (F)], as above detailed;
- at least one (per)fluoroelastomer [elastomer (A)], as above detailed, and
- at least one curing system for the elastomer (A).

All the features described above for components polymer (F), elastomer (A), and for optional ingredients of the vulcanizate (C) are also applicable here as preferred embodiments of the mixture (M).

As mentioned, for obtaining the vulcanizate (C) of the present invention, the precursor mixture [mixture (M)] to be submitted to dynamic curing for obtaining the vulcanizate (C) further comprises at least one curing system for the elastomer (A).

It is thus understood that the vulcanizate (C) may thus additional comprise residues or decompositions products derived from said curing system, without this deviating from above detailed description.

The curing system can be effective for ionic curing, peroxide curing and/or mixed curing of the elastomer (A).

The amount of the curing system is not particularly limited, provided that is present in an amount effective to ensure crosslinking of the elastomer (A) within the vulcanizate (C).

A curing system for peroxide curing generally comprises at least one peroxide (generally organic peroxide) that is capable of generating radicals by thermal decomposition, in an amount generally of between 0.1 and 10 and preferably between 0.5 and 5 weight parts per hundred parts of the elastomer (A). Among most commonly used agents, mention can be made of: dialkyl peroxides, for instance di-tert-butyl peroxide and 2,5-dimethyl-2,5-bis(tert-butylperoxy)hexane; dicumyl peroxide; dibenzoyl peroxide; di-tert-butyl perbenzoate; bis[1,3-dimethyl-3-(tert-butylperoxy)butyl] carbonate.

Further, in addition, the curing system for peroxide curing comprises:
(a) curing coagents, in amounts generally of between 0.5 % and 10 % and preferably between 1 % and 7 % by weight relative to the polymer; among these agents, the following are commonly used : triallyl cyanurate; triallyl isocyanurate (TAIC); tris(diallylamine)-s-triazine; triallyl phosphite; N,N-diallylacrylamide; N,N,N',N'-tetraallylmalonamide; trivinyl isocyanurate; 2,4,6-trivinyl methyltrisiloxane; bis-olefins (OF), as above detailed; triazines substituted with ethylenically unsaturated groups, such as notably those described in EP 860436 A (AUSIMONT SPA) 26.08.1998 and WO 97/05122 (DUPONT) 13.02.1997 ; among above mentioned curing coagents, TAIC and bis-olefins (OF), as above detailed, and more specifically those of formula (OF-1), as above detailed, have been found to provide particularly good results;
(b) optionally, a metal compound, generally in amounts of between 1 and 15, and preferably between 2 and 10 weight parts per 100 parts of fluoroelastomer (A), typically selected from the group consisting of (i) oxides and hydroxides of divalent metals, for instance Mg, Zn, Ca or Pb, (ii) salts of a weak acid, for instance Ba, Na, K, Pb, Ca stearates, benzoates, carbonates, oxalates or phosphites, and (iii) mixtures of (i) and (ii);;
(c) optionally, an acid acceptor of non-metal oxide/hydroxide type, selected from the group consisting of 1,8-bis(dimethylamino)naphthalene, octadecylamine, oxiranes, glycidyl resins obtained by condensation of bisphenol A and epichlorhydrine, organosilances (such as 3-glycidoxypropyl trimethoxy silane).

When the vulcanizate (C) is obtained by peroxide curing, elastomer (A) preferably contains iodine and/or bromine atoms in the chain and/or at the end of the macromolecules. The introduction of these iodine and/or bromine atoms may be obtained:
- by addition during elastomer (A) manufacture to the polymerization medium of brominated and/or iodinated cure-site comonomers, such as bromo and/or iodo olefins containing from 2 to 10 carbon atoms, or iodo and/or bromo fluoroalkyl vinyl ethers, in amounts such that the content of cure-site comonomers in the elastomer (A) is generally between 0.05 and 2 mol per 100 mol of the other base monomer units; or
- via addition during elastomer (A) manufacture of iodinated and/or brominated chain-transfer agent(s) to the polymerization medium, for instance compounds of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2 or alkali metal or alkaline-earth metal iodides and/or bromides.

A curing system for ionic curing generally comprises at least one curing agent and at least one accelerator, as well known in the art.

The amount of accelerator(s) is generally comprised between 0.05 and 5 weight parts per hundred parts of elastomer (A) (phr) and that of the curing agent typically between 0.5 and 15 phr and preferably between 1 and 6 phr.

Aromatic or aliphatic polyhydroxylated compounds, or derivatives thereof, may be used as curing agents. Among these, mention will be made in particular of dihydroxy, trihydroxy and tetrahydroxy benzenes, naphthalenes or anthracenes; bisphenols, in which the two aromatic rings are linked together via an aliphatic, cycloaliphatic or aromatic divalent radical, or alternatively via an oxygen or sulphur atom, or else a carbonyl group. The aromatic rings may be substituted with one or more chlorine, fluorine or bromine atoms, or with carbonyl, alkyl or acyl groups. Bisphenol AF is particularly preferred.

Examples of accelerators that may be used include: quaternary ammonium or phosphonium salts; aminophosphonium salts; phosphoranes; the imine compounds; etc. Quaternary phosphonium salts and aminophosphonium salts are preferred.

Instead of using the accelerator and the curing agent separately, it is also possible for the curing system for ionic curing to comprise an adduct between an accelerator and a curing agent in a mole ratio of from 1:2 to 1:5 and preferably from 1:3 to 1:5, the accelerator being one of the organic onium compounds having a positive charge, as defined above, and the curing agent being chosen from the compounds indicated above, in particular dihydroxy or polyhydroxy or dithiol or polythiol compounds; the adduct being obtained by melting the product of reaction between the accelerator and the curing agent in the indicated mole ratios, or by melting the mixture of the 1:1 adduct supplemented with the curing agent in the indicated amounts. Optionally, an excess of the accelerator, relative to that contained in the adduct, may also be present.

The following are particularly preferred as cations for the preparation of the adduct: 1,1-diphenyl-1-benzyl-N-diethylphosphoranamine and tetrabutylphosphonium; particularly preferred anions are bisphenol compounds in which the two aromatic rings are bonded via a divalent radical chosen from perfluoroalkyl groups of 3 to 7 carbon atoms, and the OH groups are in the para position.

Other ingredients optionally comprised in the curing system for ionic curing are :
i) one or more mineral acid acceptors, generally chosen from those known in the ionic curing of elastomers, preferably selected from the group consisting of oxides of divalent metals, preferably oxides of Mg, Zn, Ca or Pb, typically comprised in amounts of 1-40 phr of elastomer (A);
ii) one or more basic compounds chosen from those known in the ionic curing of elastomers, commonly selected from the group consisting of hydroxides of divalent metals (preferably: Ca(OH)₂, Sr(OH)₂, Ba(OH)₂), metal salts of weak acids, for instance Ca, Sr, Ba, Na and K carbonates, benzoates, oxalates and phosphites and mixtures of the above mentioned hydroxides with the above mentioned metal salts, typically added in amounts of from 0.5 to 10 phr of elastomer (A).

The invention further pertains to a method for manufacturing the vulcanizate (C), as above detailed, comprising dynamic curing of the mixture (M), as above detailed.

The method generally comprises heating the mixture (M) in an extruder or a mixer at a temperature above the crystalline melting point of the polymer (F), if polymer (F) is semi-crystalline, or above its glass transition temperature if polymer (F) is amorphous and vulcanizing the elastomer (A) while exerting a mixing shearing force.

The temperature is usually at least 200°C, preferably at least 250°C.

Preferred devices for carrying out the method of the invention are extruders. In such embodiments, ingredients of the mixture (M) can be pre-mixed all together and e.g. fed to the extruder through a single hopper, or can be fed to the extruder through separated feeders. It is generally preferred to add the above described curing system for the elastomer (A) through a separate feeder, which will deliver said curing system in the molten mass of elastomer (A) and fluoropolymer (F).

This operating method can be applied either with a view to manufacturing finished products made from vulcanizate (C) such as, for example, cable sheathings and the like, or, by adding a granulation stage thereto, with a view to have available granules made of vulcanizate (C), which facilitates its subsequent conversion into finished products.

The invention further pertains to a cable comprising a component comprising the vulcanizate (C), as above detailed.

Said component made from the vulcanizate (C) may include a jacket, a primary insulation sheath, and may include various sub-components such as a shield tape, a strength member, cross-web, film, buffer, separator, pull cord, sub-jacket, all well known in the industry, any one or more of which may be made or otherwise may comprise the vulcanizate (C) of the invention.

Preferably, the cable of the invention comprises at least one component selected from the group consisting of primary insulation sheath and jacket, made of the vulcanizate (C), as above detailed.

Preferred cables according to the invention are insulated wire, communication cables, and optical cables.

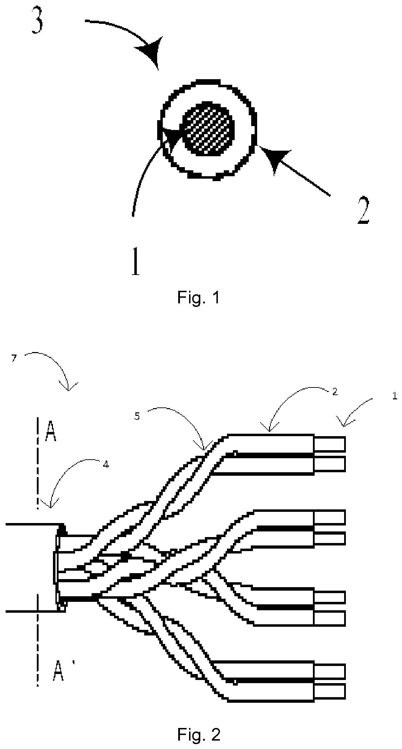

FIG. 1 is a section view of an insulated cable comprising a primary insulation sheath made from the vulcanizate (C), according to a first embodiment of the invention. The insulated wire (3) of FIG. 1 comprises an optic fiber (1) or a metal conductor wire (1), generally aluminium or copper, preferably copper, surrounded by a primary insulation sheath (2) made from the vulcanizate (C) of the present invention. Preferred cables of this embodiment are insulated wires comprising a metal conductor wire.

The primary insulation sheath (2) can be advantageously obtained by extruding vulcanizate (C) or by simultaneous dynamic curing and extrusion of mixture (M), as above detailed, using a tubing (including semi-tubing) technique which involves a crosshead assembly and a tip and die configuration that contains flow channels designed to maximize the uniformity of the coating on the central conductor wire or optic fiber. A tube of the vulcanizate (C) of the invention is advantageously extruded around and spaced from the conductor wire or the optic fiber, and said tube is advantageously extruded such that the thickness of the vulcanizate (C) is reduced or drawn down before it contacts the conductor wire or the optic fiber. A vacuum is advantageously provided between the conductor wire or the optic fiber and the vulcanizate (C) being extruded under the form of a tube, thereby causing atmospheric pressure to progressively press said extruded tube of vulcanizate (C) into contact with the conductor wire or with the optic fiber.

As an alternative, application of the vulcanizate (C) through means of pressure extrusion technique may also be suitable. In pressure extrusion, mixture (M) or vulcanizate (C) can be fed to an extruder, wherein the conductor wire is advantageously brought into contact with molten vulcanizate (C) (i.e. in case of feeding mixture (M), when dynamic vulcanization is completed) within the crosshead die to form the coating directly onto the conductor wire or the optic fiber. According to this embodiment, no pre-formed tube of vulcanizate (C) is extruded.

FIG. 2 is a side view, with parts broken away, of a communication cable (7) according to a second embodiment of the invention. The electrical cable embodiment of the invention illustrated in FIG. 2 generally comprises a plurality of individual electrical conductors, which each comprises a conductor wire (1) and a primary insulation sheath (2) so that they are electrically insulated from one another. Pairs of said wires are generally twisted into a bundle (5) and several bundles are held together by jacket (4). Both jacket (4) and primary insulation sheath (2) can comprise the composition or the foamed insulation as above detailed.

Jacket (4) can be similarly formed by extrusion either by tubing extrusion technique or by pressure extrusion technique, as above described for the primary insulation sheath, being understood that the conductor wire or the optical fiber will be replaced in this embodiment by an insulated conductor or insulated fiber or assembly thereof.

In communication cables, four pairs of insulated wires are generally twisted together and said twisted pairs (5) are typically held together by jacket (4).

Any one or more of jacket (4) and primary insulation sheaths (2) can be made of the vulcanizate (C) as above detailed.

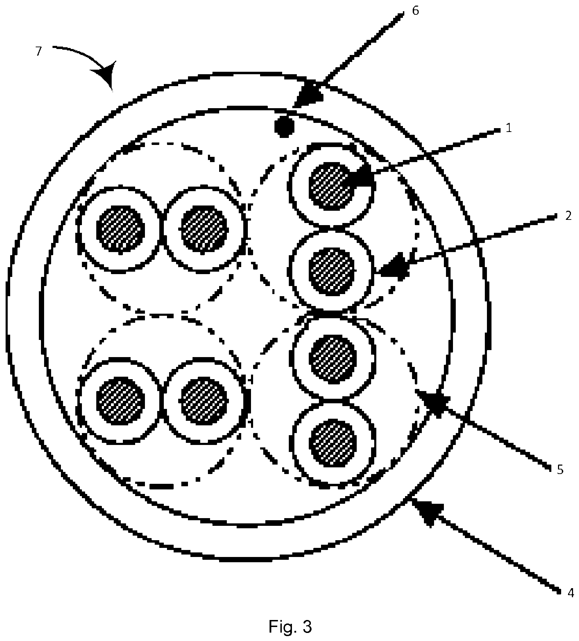

FIG. 3 is a cross-sectional view along A-A' plane (see FIG.2) of the communication cable (7) according to the second embodiment of the invention the invention. A ripcord (6) can be present.

According to another embodiment of the invention, the cable is an optical cable. In an optical cable according to the invention, the conductor wire is replaced by glass optical fiber strands. Thus, a typical construction of an optical cable according to the invention comprises a plurality of groups of glass fiber optic strands wrapped around another glass strand or a coated steel wire or core, each of said groups being surrounded by a primary sheathing, and said plurality of groups being surrounded by a jacket. Equally in this case, the primary sheathing and/or the jacket can be made of the vulcanizate (C) as above detailed.

Finally, the invention pertains to a method of manufacturing a cable, as above detailed, including using the vulcanizate (C) and/or the mixture (M) as above detailed.

When the component comprising the vulcanizate (C) is any of primary insulation sheath and jacket, the method of the invention will comprise using mixture (M) or vulcanizate (C) in any of tubing extrusion technique and pressure extrusion technique, as advantageously described above.

Should the disclosure of any patents, patent applications, and publications which are incorporated herein by reference conflict with the description of the present application to the extent that it may render a term unclear, the present description shall take precedence.

The invention will be now described in more detail with reference to the following embodiments whose purpose is merely illustrative and not intended to limit the scope of the present invention.

### EXAMPLES

### RAW MATERIALS

TECNOFLON^{®} MN FKM is a vinylidene fluoride/hexafluoropropylene elastomer having a fluorine content of 66 % wt, available under the form of a micronized powder with average particle size of about 500 µm (elastomer (A1), herein after).

TECNOFLON^{®} FOR M1 is a masterbatch made of appr. 50.0 % wt of an elastomeric VDF/HFP copolymer and appr. 50.0 % wt of 4,4'-[2,2,2-trifluoro-1-(trifluoromethyl)ethylidene]bisphenol (FOR M1, herein after)

TECNOFLON^{®} FOR M2 is a masterbatch made of appr. 70.0 % wt of an elastomeric VDF/HFP copolymer and appr. 30.0 % wt of Benzyl (diethylamino) diphenyl phosphonium chloride (FOR M2, herein after)

HALAR^{®} ECTFE XPH 800, which is an E/CTFE copolymer comprising about 1.5 % wt of recurring units derived from perfluoropropylvinylether, commercially available from Solvay Specialty Polymers (ECTFE (F1), hereinafter).

FPA-1 is FLUOROLINK® A10 perfluoropolyether macromer, having end chains of formula -CONH-C₁₈H₃₇, with Mw ∼ 1800, 40 % fluorine content and melting point of about 40°C.

MANUFACTURE OF TPV COMPOSITIONS

A thermoplastic vulcanizate was produced in an extruder by dynamic vulcanization, adopting the following temperature profile:

**Table 1**

| Zone | 1 | 2 | 3 | 4 | Flange 1 | Flange 2 |
|---|---|---|---|---|---|---|
| T (°C) | 172 | 200 | 221 | 240 | 238 | 240 |

**Table 2**

| Zone | Neck | Head | Die 1 | Die 2 | Melt |
|---|---|---|---|---|---|
| T (°C) | 240 | 240 | 240 | 260 | 254 |

Compound recipe and properties are summarized in the following table:

**Table 9**

| | | Ex. 1 |
|---|---|---|
| Elastomer (A1) | phr | 100 |
| FOR1 | phr | 4 |
| FOR2 | phr | 1 |
| ECTFE (F1) | phr | 35 |
| FPA-1 | phr | 11 |
| Ca(OH)₂ | phr | 1.4 |
| MI (260°C/2.16 kg) | g/10' | 2 |
| Shore A | | 76 |
| Modulus | (psi) | 1144 |
| Elongation at break | (%) | 163 |
| % swelling in DMAc | (%) | 179 |
| CS (150°C/70h) | % | 93.2 |

The TPV compound, as above detailed, possesses advantageous Shore A, modulus and elongation at break properties, which makes the same particularly adapted for W&C applications.

Compound as above detailed was used for jacketing a communication cable assembly of four of individual electrical conductors, each comprising a conductor wire and a primary insulation sheath, using a WD labs Wireline extrusion equipment (die: 0.492"; tip: 0.410" x 0.250"), in the following conditions:

**Table 4**

| Zone | 1 | 2 | 3 | 4 | Flange 1 | Flange 2 |
|---|---|---|---|---|---|---|
| T (°C) | 172 | 200 | 221 | 240 | 238 | 240 |

**Table 5**

| Zone | Neck | Head | Die 1 | Die 2 | Melt |
|---|---|---|---|---|---|
| T (°C) | 240 | 240 | 240 | 260 | 254 |

Pressure was 154 bar, screw was rotating at 9 rpm, to provide a jacket having a thickness of 0.02 inches (about 500 µm). The TPV performances were found to be good in terms of color, melt strength and coating, and clearly demonstrated appropriateness of inventive compounds for W&C coating.

## Claims

1. A thermoplastic vulcanizate fluorine-containing composition [vulcanizate (C)], comprising a continuous thermoplastic fluoropolymer phase and a dispersed vulcanized fluoroelastomer phase, said composition comprising:
- at least one thermoplastic fluoropolymer [polymer (F)], said polymer (F) comprising
(j) from 40 to 55% by moles of recurring units derived from ethylene (E);
(jj) from 55 to 40% by moles of recurring units derived from at least one of chlorotrifluoroethylene (CTFE) and tetrafluoroethylene (TFE); and
(jjj) from 0.5 to 10% by moles of recurring units derived from of at least one (per)fluoroalkylvinylether of formula CX₂=CX-OR_{f}, wherein each of X, equal to or different from each other, is independently H or F (preferably F); and R_{f} is a C₁-C₁₂ (per)fluoroalkyl group or a C₁-C₁₂ (per)fluoro-oxy-alkyl group comprising one or more than one catenary oxygen atoms [monomer (V)],
with % by moles being referred to the total moles of recurring units of the polymer (F); and
- at least one (per)fluoroelastomer [elastomer (A)].

2. The vulcanizate (C) of claim 1, wherein polymer (F) comprises :
(j) from 45 to 53 % by moles of recurring units derived from E;
(jj) from 55 to 45%by moles of recurring units derived from at least one of CTFE and TFE; and
(jjj) from 0.5 to 5%, preferably from 0.5 to 3 % by moles of recurring unit derived from at least one monomer (V),
with % by moles being referred to the total moles of recurring units of the polymer (F).

3. The vulcanizate (C) of anyone of the preceding claims, wherein polymer (F) is an ECTFE polymer consisting essentially of recurring units derived from:
(j) from 46 to 52% by moles of ethylene (E);
(jj) from 54 to 48% by moles of chlorotrifluoroethylene (CTFE),
based on the sum of (j) and (jj), and
(jjj) from 0.01 to 5 % by moles, based on the sum of (j), (jj) and (jjj), of at least
one perfluoroalkylvinylethers complying with formula CF₂=CFOR_{f1} in which R_{f1} is a C₁-C₆ perfluoroalkyl, e.g. CF₃, C₂F₅, C₃F₇.

4. The vulcanizate (C) according to anyone of the preceding claims, wherein (per)fluoroelastomer (A) is selected from the group consisting of:
(1)VDF-based copolymers, in which VDF is copolymerized with at least one comonomer selected from the group consisting of the followings classes, with the provisio that such comonomer is different from VDF:
(a1) C₂-C₈ perfluoroolefins, such as tetrafluoroethylene (TFE), hexafluoropropylene (HFP);
(b1) hydrogen-containing C₂-C₈ fluoro-olefins, such as C₂-C₈ partially fluorinated olefins, vinyl fluoride (VF), trifluoroethylene (TrFE), perfluoroalkyl ethylenes of formula CH₂ = CH-R_{f}, wherein R_{f} is a C₁-C₆ perfluoroalkyl group;
(c1) C₂-C₈ chloro and/or bromo and/or iodo-fluoroolefins such as chlorotrifluoroethylene (CTFE);
(d1) (per)fluoroalkylvinylethers of formula CF₂ = CFOR_{f}, wherein R_{f} is a C₁-C₆ (per)fluoroalkyl group; preferably perfluoroalkylvinylethers (PAVE) of above formula wherein R_{f} is C₁-C₆ perfluoroalkyl group, e.g. CF₃, C₂F₅, C₃F₇;
(e1) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
(f1) (per)fluorodioxoles having formula :
wherein R_{f3}, R_{f4}, R_{f5}, R_{f6}, equal or different from each other, are independently selected among fluorine atoms and C₁-C₆ (per)fluoroalkyl groups, optionally comprising one or more than one oxygen atom, such as notably -CF₃, -C₂F₅, - C₃F₇, -OCF₃, -OCF₂CF₂OCF₃; preferably, perfluorodioxoles;
(g1) (per)fluoro-methoxy-vinylethers (MOVE, hereinafter) having formula: CFX² = CX²OCF₂OR"_{f}
wherein R"_{f} is selected among C₁-C₆ (per)fluoroalkyls, linear or branched; C₅-C₆ cyclic (per)fluoroalkyls; and C₂-C₆ (per)fluorooxyalkyls, linear or branched, comprising from 1 to 3 catenary oxygen atoms, and X² = F, H; preferably X² is F and R"_{f} is -CF₂CF₃ (MOVE1); -CF₂CF₂OCF₃ (MOVE2); or -CF₃ (MOVE3); (h1) C₂-C₈ non-fluorinated olefins (OI), for example ethylene and propylene; and
(2)TFE-based copolymers, in which TFE is copolymerized with at least one comonomer selected from the group consisting of the classes (a1), (c1), (d1), (e1), (g1), (h1), and class (i1) below, with the provision that such comonomer is different from TFE:
(i2) perfluorovinyl ethers containing cyanide groups.

5. The vulcanizate (C) according to anyone of the preceding claims, wherein the weight ratio polymer (F)/elastomer (A) will be comprised between 10/90 wt/wt to 50/50 wt/wt, preferably 20/80 to 40/60 wt/wt.

6. A precursor mixture [mixture (M)] of a thermoplastic vulcanizate fluorine-containing composition, said mixture (M) comprising:
- at least one thermoplastic fluoropolymer [polymer (F)], said polymer (F) comprising
(j) from 40 to 55% by moles of recurring units derived from ethylene (E);
(jj) from 55 to 40% by moles of recurring units derived from at least one of chlorotrifluoroethylene (CTFE) and tetrafluoroethylene (TFE); and
(jjj) from 0.5 to 10% by moles of recurring units derived from of at least one (per)fluoroalkylvinylether of formula CX₂=CX-OR_{f}, wherein each of X, equal to or different from each other, is independently H or F (preferably F); and R_{f} is a C₁-C₁₂ (per)fluoroalkyl group or a C₁-C₁₂ (per)fluoro-oxy-alkyl group comprising one or more than one catenary oxygen atoms [monomer (V)],
with % by moles being referred to the total moles of recurring units of the polymer (F);
- at least one (per)fluoroelastomer [elastomer (A)], and
- at least one curing system for the elastomer (A).

7. The mixture (M) according to claim 6, wherein said curing system is effective for peroxide curing of the elastomer (A) and comprises at least one peroxide (generally an organic peroxide) that is capable of generating radicals by thermal decomposition, in an amount generally of between 0.1 and 10 and preferably between 0.5 and 5 weight parts per hundred parts of the elastomer (A) and further comprises:
(a)curing coagents, in amounts generally of between 0.5 % and 10 % and preferably between 1 % and 7 % by weight relative to the polymer;
(b)optionally, a metal compound, generally in amounts of between 1 and 15, and preferably between 2 and 10 weight parts per 100 parts of fluoroelastomer (A), typically selected from the group consisting of (i) oxides and hydroxides of divalent metals, for instance Mg, Zn, Ca or Pb, (ii) salts of a weak acid, for instance Ba, Na, K, Pb, Ca stearates, benzoates, carbonates, oxalates or phosphites, and (iii) mixtures of (i) and (ii);
(c) optionally, an acid acceptor of non-metal oxide/hydroxide type, selected from the group consisting of 1,8-bis(dimethylamino)naphthalene, octadecylamine, oxiranes, glycidyl resins obtained by condensation of bisphenol A and epichlorhydrine, organosilances (such as 3-glycidoxypropyl trimethoxy silane).

8. The mixture (M) according to claim 6, wherein said curing system is effective for ionic curing of the elastomer (A) and comprises at least one curing agent and at least one accelerator, and wherein the amount of accelerator(s) is generally comprised between 0.05 and 5 weight parts per hundred parts of elastomer (A) (phr) and that of the curing agent typically between 0.5 and 15 phr and preferably between 1 and 6 phr.

9. A method for manufacturing the vulcanizate (C) of claim 1 to 5, comprising dynamic curing of the precursor mixture of claim 6 to 8.

10. A method of coating a wire, including using the mixture (M) of claims 6 to 8.

11. A wire comprising a sheathing made of the vulcanizate (C) according to anyone of claims 1 to 5.

## Patentansprüche

1. Fluorhaltige thermoplastische Vulkanisatzusammensetzung [Vulkanisat (C)], umfassend eine kontinuierliche thermoplastische Fluorpolymerphase und eine dispergierte vulkanisierte Fluorelastomerphase, wobei die Zusammensetzung Folgendes umfasst :
- mindestens ein thermoplastisches Fluorpolymer [Polymer (F)], wobei das Polymer (F) Folgendes umfasst :
(j) 40 bis 55 Mol- % Wiederholungseinheiten, die sich von Ethylen (E) ableiten;
(jj) 55 bis 40 Mol- % Wiederholungseinheiten, die sich von Chlortrifluorethylen (CTFE) und/oder Tetrafluorethylen (TFE) ableiten; und
(jjj) 0,5 bis 10 Mol- % Wiederholungseinheiten, die sich von mindestens einem (Per)fluoralkylvinylether der Formel CX₂=CX-OR_{f}, worin X jeweils gleich oder voneinander verschieden ist und unabhängig für H oder F (vorzugsweise F) steht; und R_{f} für eine C₁-C₁₂-(Per)fluoralkylgruppe oder eine C₁-C₁₂-(Per)fluoroxyalkylgruppe mit einem oder mehr als einem kettenständigen Sauerstoffatom steht, [Monomer (V)] ableiten,
wobei sich die Mol- %-Angaben auf die gesamten Mole von Wiederholungseinheiten des Polymers (F) beziehen; und
- mindestens ein (Per)fluorelastomer [Elastomer (A)].

2. Vulkanisat (C) nach Anspruch 1, wobei Polymer (F) Folgendes umfasst :
(j) 45 bis 53 Mol- % Wiederholungseinheiten, die sich von E ableiten;
(jj) 55 bis 45 Mol- % Wiederholungseinheiten, die sich von CTFE und/oder TFE ableiten; und
(jjj) 0,5 bis 5 Mol- %, vorzugsweise 0,5 bis 3 Mol- % Wiederholungseinheiten, die sich von mindestens einem [Monomer (V)] ableiten,
wobei sich die Mol- %-Angaben auf die gesamten Mole von Wiederholungseinheiten des Polymers (F) beziehen.

3. Vulkanisat (C) nach einem der vorhergehenden Ansprüche, wobei es sich bei Polymer (F) um ein ECTFE-Polymer handelt, das im Wesentlichen aus Wiederholungseinheiten besteht, die sich von :
(j) 46 bis 52 Mol- % Ethylen (E);
(jj) 54 bis 48 Mol- % Chlortrifluorethylen (CTFE), bezogen auf die Summe von (j) und (jj), und
(jjj) 0,01 bis 5 Mol- %, bezogen auf die Summe von (j), (jj) und (jjj), mindestens eines Perfluoralkylvinylethers der Formel CF₂=CFOR_{f1}, worin R_{f1} für ein C₁-C₆-Perfluoralkyl, z.B. CF₃, C₂F₅, C₃F₇, steht.

4. Vulkanisat (C) nach einem der vorhergehenden Ansprüche, wobei das(Per)fluorelastomer (A) aus der Gruppe bestehend aus :
(1) auf VDF basierenden Copolymeren, in denen VDF mit mindestens einem Comonomer aus den folgenden Klassen copolymerisiert ist, mit der Maßgabe, dass ein derartiges Comonomer von VDF verschieden ist :
(a1) C₂-C₈-Perfluorolefinen, wie Tetrafluorethylen (TFE), Hexafluorpropylen (HFP);
(b1) wasserstoffhaltigen C₂-C₈-Fluorolefinen, wie teil-fluorierten C₂-C₈-Olefinen, Vinylfluorid (VF), Trifluorethylen (TrFE), Perfluor-alkylethylenen der Formel CH₂=CH-R_{f}, worin R_{f} für eine C₁-C₆-Perfluoralkylgruppe steht;
(c1) C₂-C₈-Chlor- und/oder -Brom- und/oder -Iodfluorolefinen wie Chlortrifluorethylen (CTFE);
(d1) (Per)fluoralkylvinylethern der Formel CF₂=CFOR_{f}, worin R_{f} für eine C₁-C₁₂-(Per)fluoralkylgruppe steht; vorzugsweise Perfluoralkylvinylethern (PAVE) der obigen Formel, worin R_{f} für eine C₁-C₆-Perfluoralkylgruppe, z.B. CF₃, C₂F₅, C₃F₇, steht;
(e1) (Per)fluoroxyalkylvinylethern der Formel CF₂=CFOX, worin X für ein C₁-C₁₂-((Per)fluor)oxyalkyl mit kettenständigen Sauerstoffatomen, z.B. die Perfluor-2-propoxypropylgruppe, steht;
(fl) (Per)fluordioxolen der Formel:
worin R_{f3}, R_{f4}, R_{f5} und R_{f6} gleich oder voneinander verschieden sind und unabhängig aus Fluoratomen und C₁-C₆-(Per)fluoralkylgruppen, die gegebenenfalls ein oder mehr als ein Sauerstoffatom enthalten, wie insbesondere -CF₃, -C₂F₅, -C₃F₇, -OCF₃, -OCF₂CF₂OCF₃, ausgewählt sind; vorzugsweise Perfluordioxolen;
(g1) (Per)fluormethoxyvinylethern (im Folgenden MOVE) der Formel:
CFX²=CX²OCF₂OR"_{f}
worin R"_{f} aus linearen oder verzweigten C₁-C₆-(Per)fluoralkylgruppen; cyclischen C₅-C₆-(Per)fluoralkylgruppen und linearen oder verzweigten C₂-C₆-(Per)fluoroxyalkylgruppen mit 1 bis 3 kettenständigen Sauerstoffatomen ausgewählt ist und X² = F, H; vorzugsweise X² für F steht und R"_{f} für -CF₂CF₃ (MOVE1); -CF₂CF₂OCF₃ (MOVE2) oder -CF₃ (MOVE3) steht;
(h1) nichtfluorierten C₂-C₈-Olefinen (Ol), beispielsweise Ethylen und Propylen; und
(2) auf TFE basierenden Copolymeren, in denen TFE mit mindestens einem Comonomer aus den Klassen (a1), (c1), (d1), (e1), (g1), (h1) und Klasse (i1) unten copolymerisiert ist, mit der Maßgabe, dass ein derartiges Comonomer von TFE verschieden ist :
(i2) Perfluorvinylethern mit Cyanidgruppen;
ausgewählt ist.

5. Vulkanisat (C) nach einem der vorhergehenden Ansprüche, wobei das Gewichtsverhältnis von Polymer (F) zu Elastomer (A) 10/90 Gew./Gew. bis 50/50 Gew./Gew., vorzugsweise 20/80 bis 40/60 Gew./Gew. beträgt.

6. Vorläufermischung [Mischung (M)] für eine fluorhaltige thermoplastische Vulkanisatzusammensetzung, wobei die Mischung (M) Folgendes umfasst:
- mindestens ein thermoplastisches Fluorpolymer [Polymer (F)], wobei das Polymer (F) Folgendes umfasst :
(j) 40 bis 55 Mol- % Wiederholungseinheiten, die sich von Ethylen (E) ableiten;
(jj) 55 bis 40 Mol- % Wiederholungseinheiten, die sich von Chlortrifluorethylen (CTFE) und/oder Tetrafluorethylen (TFE) ableiten; und
(jjj) 0,5 bis 10 Mol- % Wiederholungseinheiten, die sich von mindestens einem (Per)fluoralkylvinylether der Formel CX₂=CX-OR_{f}, worin X jeweils gleich oder voneinander verschieden ist und unabhängig für H oder F (vorzugsweise F) steht und R_{f} für eine C₁-C₁₂-(Per)fluoralkylgruppe oder eine C₁-C₁₂-(Per)fluoroxyalkylgruppe mit einem oder mehr als einem kettenständigen Sauerstoffatom steht, [Monomer (V)] ableiten,
wobei sich die Mol- %-Angaben auf die gesamten Mole von Wiederholungseinheiten des Polymers (F) beziehen;
- mindestens ein (Per)fluorelastomer [Elastomer (A)] und
- mindestens ein Härtungssystem für das Elastomer (A).

7. Mischung (M) nach Anspruch 6, wobei das Härtungssystem für die Peroxid-Härtung des Elastomers (A) wirksam ist und mindestens ein Peroxid (im Allgemeinen ein organisches Peroxid), das zur Erzeugung von Radikalen durch thermische Zersetzung befähigt ist, in einer Menge, die im Allgemeinen zwischen 0,1 und 10 und vorzugsweise zwischen 0,5 und 5 Gewichtsteilen pro hundert Gewichtsteile des Elastomers (A) umfasst und ferner Folgendes umfasst :
(a) Cohärter in Mengen, die im Allgemeinen zwischen 0,5 und 10 Gew.- % und vorzugsweise zwischen 1 und 7 Gew.- %, bezogen auf das Polymer, liegen;
(b) gegebenenfalls eine Metallverbindung in Mengen zwischen 1 und 15 und vorzugsweise zwischen 2 und 10 Gewichtsteilen pro 100 Teile Fluorelastomer (A), typischerweise aus der Gruppe bestehend aus (i) Oxiden und Hydroxiden von zweiwertigen Metallen, beispielsweise Mg, Zn, Ca oder Pb, (ii) Salzen einer schwachen Säure, beispielsweise Stearaten, Benzoaten, Carbonaten, Oxalaten oder Phosphiten von Ba, Na, K, Pb, Ca, und (iii) Mischungen von (i) und (ii);
(c) gegebenenfalls einen Säureakzeptor von NichtMetalloxid-/Nicht-Metallhydroxid-Typ aus der Gruppe bestehend aus 1,8-Bis(dimethylamino)-naphthalin, Octadecylamin, Oxiranen, durch Kondensation von Bisphenol A und Epichlorhydrin erhaltenen Glycidylharzen, Organosilanen (wie 3-Glycidoxypropyltrimethoxysilan).

8. Mischung (M) nach Anspruch 6, wobei das Härtungssystem für die Peroxid-Härtung des Elastomers (A) wirksam ist und mindestens einen Härter und mindestens einen Beschleuniger umfasst, wobei die Menge an Beschleuniger(n) im Allgemeinen zwischen 0,05 und 5 Gewichtsteilen pro hundert Gewichtsteile Elastomer (A) (phr) liegt und die Menge des Härters typischerweise zwischen 0,5 und 15 phr und vorzugsweise zwischen 1 und 6 phr liegt.

9. Verfahren zur Herstellung des Vulkanisats (C) nach Anspruch 1 bis 5, umfassend das dynamische Härten der Vorläufermischung nach Anspruch 6 bis 8.

10. Verfahren zum Beschichten eines Drahts, bei dem die Mischung (M) nach den Ansprüchen 6 bis 8 verwendet wird.

11. Draht mit einer Umhüllung aus dem Vulkanisat (C) gemäß einem der Ansprüche 1 bis 5.

## Revendications

1. Composition de vulcanisat thermoplastique contenant du fluor [vulcanisat (C)], comprenant une phase continue de fluoropolymère thermoplastique et une phase dispersée de fluoroélastomère vulcanisé, ladite composition comprenant :
- au moins un fluoropolymère thermoplastique [polymère (F)], ledit polymère (F) comprenant
(j) de 40 à 55 % en moles de motifs récurrents dérivés de l'éthylène (E) ;
(jj) de 55 à 40 % en moles de motifs récurrents dérivés du chlorotrifluoroéthylène (CTFE) et/ou du tétrafluoroéthylène (TFE) ; et
(jjj) de 0,5 à 10 % en moles de motifs récurrents dérivés d'au moins un éther (per)fluoroalkylvinylique de formule CX₂=CX-OR_{f}, dans laquelle chacun des X, identique ou différent des autres, représente indépendamment H ou F (de préférence F) ; et R_{f} représente un groupe (per)fluoroalkyle en C₁-C₁₂ ou un groupe (per)fluoro-oxy-alkyle en C₁-C₁₂ comprenant un ou plusieurs atomes d'oxygène caténaires [monomère (V)],
les % en moles se rapportant aux moles totales de motifs récurrents du polymère (F) ; et
- au moins un (per)fluoroélastomère [élastomère (A)].

2. Vulcanisat (C) de la revendication 1, dans lequel le polymère (F) comprend :
(j) de 45 à 53 % en moles de motifs récurrents dérivés du E ;
(jj) de 55 à 45 % en moles de motifs récurrents dérivés du CTFE et/ou du TFE ; et
(jjj) de 0,5 à 5 %, de préférence de 0,5 à 3 % en moles de motifs récurrents dérivés d'au moins un monomère (V),
les % en moles se rapportant aux moles totales de motifs récurrents du polymère (F).

3. Vulcanisat (C) de l'une quelconque des revendications précédentes, dans lequel le polymère (F) est un polymère d'ECTFE essentiellement composé de motifs récurrents dérivés de :
(j) de 46 à 52 % en moles d'éthylène (E) ;
(jj) de 54 à 48 % en moles de chlorotrifluoroéthylène (CTFE), rapporté à la somme de (j) et (jj), et
(jjj) de 0,01 à 5 % en moles, rapporté à la somme de (j), (jj) et (jjj), d'au moins un éther perfluoroalkylvinylique répondant à la formule CF₂=CFOR_{f1} dans laquelle R_{f1} représente un perfluoroalkyle en C₁-C₆, par ex. CF₃, C₂F₅, C₃F₇.

4. Vulcanisat (C) selon l'une quelconque des revendications précédentes, dans lequel le (per)fluoroélastomère (A) est choisi dans le groupe constitué par :
(1) les copolymères à base de VDF, dans lesquels le VDF est copolymérisé avec au moins un comonomère choisi dans le groupe constitué par les classes suivantes, à condition que ce comonomère soit différent du VDF :
(a1) les perfluorooléfines en C₂-C₈, telles que le tétrafluoroéthylène (TFE), l'hexafluoropropylène (HFP) ;
(b1) les fluorooléfines en C₂-C₈ contenant de l'hydrogène, telles que les oléfines en C₂-C₈ partiellement fluorées, le fluorure de vinyle (VF), le trifluoroéthylène (TrFE), les perfluoroalkyléthylènes de formule CH₂=CH-R_{f}, dans laquelle R_{f} représente un groupe perfluoroalkyle en C₁-C₆ ;
(c1) les chloro- et/ou bromo- et/ou iodo-fluorooléfines en C₂-C₈ telles que le chlorotrifluoroéthylène (CTFE) ;
(d1) les éthers (per)fluoroalkylvinyliques de formule CF₂=CFOR_{f}, dans laquelle R_{f} représente un groupe (per)fluoroalkyle en C₁-C₆ ; de préférence les éthers perfluoroalkylvinyliques (PAVE) de la formule ci-dessus dans laquelle R_{f} représente un groupe perfluoroalkyle en C₁-C₆, par ex. CF₃, C₂F₅, C₃F₇ ;
(e1) les éthers (per)fluoro-oxy-alkylvinyliques de formule CF₂=CFOX, dans laquelle X représente un ((per)fluoro)-oxyalkyle en C₁-C₁₂ comprenant des atomes d'oxygène caténaires, par ex. le groupe perfluoro-2-propoxypropyle ;
(fl) les (per)fluorodioxoles ayant pour formule :
dans laquelle R_{f3}, R_{f4}, R_{f5} et R_{f6}, identiques ou différents les uns des autres, sont indépendamment choisis parmi les atomes de fluor et les groupes (per)fluoroalkyle en C₁-C₆, comprenant optionnellement un ou plusieurs atomes d'oxygène, tels que, notamment, -CF₃, -C₂F₅, -C₃F₇, -OCF₃, -OCF₂CF₂OCF₃ ; de préférence, les perfluorodioxoles ;
(g1) les éthers (per)fluoro-méthoxy-vinyliques (ci-après MOVE) ayant pour formule :
CFX²=CX²OCF₂OR"_{f}
dans laquelle R"_{f} est choisi parmi les (per)fluoroalkyles en C₁-C₆, linéaires ou ramifiés ; les (per)fluoroalkyles cycliques en C₅-C₆ ; et les (per)fluorooxyalkyles en C₂-C₆, linéaires ou ramifiés, comprenant 1 à 3 atomes d'oxygène caténaires, et X² = F, H ; de préférence, X² représente F et R"_{f} représente -CF₂CF₃ (MOVE1) ; -CF₂CF₂OCF₃ (MOVE2) ; ou -CF₃ (MOVE3) ;
(h1) les oléfines en C₂-C₈ non fluorées (OI), par exemple l'éthylène et le propylène ; et
(2) les copolymères à base de TFE, dans lesquels le TFE est copolymérisé avec au moins un comonomère choisi dans le groupe constitué par les classes (a1), (c1), (d1), (e1), (g1), (h1), et la classe (i1) ci-dessous, à condition que ce comonomère soit différent du TFE :
(i2) les éthers perfluorovinyliques contenant des groupes cyanure.

5. Vulcanisat (C) selon l'une quelconque des revendications précédentes, dans lequel le rapport pondéral polymère (F)/élastomère (A) sera compris entre 10/90 pds/pds et 50/50 pds/pds, de préférence 20/80 et 40/60 pds/pds.

6. Mélange précurseur [mélange (M)] d'une composition de vulcanisat thermoplastique contenant du fluor, ledit mélange (M) comprenant :
- au moins un fluoropolymère thermoplastique [polymère (F)], ledit polymère (F) comprenant
(j) de 40 à 55 % en moles de motifs récurrents dérivés de l'éthylène (E) ;
(jj) de 55 à 40 % en moles de motifs récurrents dérivés du chlorotrifluoroéthylène (CTFE) et/ou du tétrafluoroéthylène (TFE) ; et
(jjj) de 0,5 à 10 % en moles de motifs récurrents dérivés d'au moins un éther (per)fluoroalkylvinylique de formule CX₂=CX-OR_{f}, dans laquelle chacun des X, identique ou différent des autres, représente indépendamment H ou F (de préférence F) ; et R_{f} représente un groupe (per)fluoroalkyle en C₁-C₁₂ ou un groupe (per)fluoro-oxy-alkyle en C₁-C₁₂ comprenant un ou plusieurs atomes d'oxygène caténaires [monomère (V)],
les % en moles se rapportant aux moles totales de motifs récurrents du polymère (F) ;
- au moins un (per)fluoroélastomère [élastomère (A)], et
- au moins un système de durcissement pour l'élastomère (A).

7. Mélange (M) selon la revendication 6, dans lequel ledit système de durcissement est efficace pour le durcissement peroxydique de l'élastomère (A) et comprend au moins un peroxyde (généralement un peroxyde organique) qui est susceptible de générer des radicaux par décomposition thermique, dans une quantité généralement comprise entre 0,1 et 10 et de préférence entre 0,5 et 5 parties en poids pour cent parties de l'élastomère (A) et comprend en outre :
(a) des co-durcisseurs, dans des quantités généralement comprises entre 0,5 % et 10 % et de préférence entre 1 % et 7 % en poids, rapporté au polymère ;
(b) optionnellement, un composé métallique, généralement dans des quantités comprises entre 1 et 15, et de préférence entre 2 et 10 parties en poids pour 100 parties de fluoroélastomère (A), habituellement choisi dans le groupe constitué par (i) les oxydes et hydroxydes de métaux divalents, par exemple Mg, Zn, Ca ou Pb, (ii) les sels d'un acide faible, par exemple les stéarates, benzoates, carbonates, oxalates ou phosphites de Ba, Na, K, Pb, Ca, et (iii) les mélanges de (i) et (ii) ;
(c) optionnellement, un accepteur d'acide de type oxyde/hydroxyde non métallique, choisi dans le groupe constitué par le 1,8-bis(diméthylamino)naphtalène, l'octadécylamine, les oxiranes, les résines glycidyliques obtenues par condensation de bisphénol A et d'épichlorhydrine, les organosilanes (tels que le 3-glycidoxypropyltriméthoxysilane).

8. Mélange (M) selon la revendication 6, dans lequel ledit système de durcissement est efficace pour le durcissement ionique de l'élastomère (A) et comprend au moins un durcisseur et au moins un accélérateur, et dans lequel la quantité d'accélérateur(s) est généralement comprise entre 0,05 et 5 parties en poids pour cent parties d'élastomère (A) (pcc) et celle du durcisseur habituellement entre 0,5 et 15 pcc et de préférence entre 1 et 6 pcc.

9. Procédé de fabrication du vulcanisat (C) de la revendication 1 à 5, comprenant le durcissement dynamique du mélange précurseur de la revendication 6 à 8.

10. Procédé de revêtement d'un fil, comportant l'utilisation du mélange (M) des revendications 6 à 8.

11. Fil comprenant une gaine constituée du vulcanisat (C) selon l'une quelconque des revendications 1 à 5.
